# EUROPEAN PATENT APPLICATION

(11) **EP 4 183 831 A1**
(43) Date of publication of application: **24.05.2023**
(21) Application number: 21846767.8
(22) Date of filing: 25.06.2021
(51) Int. Cl.: C08L 23/26, C08K 5/098, C08L 101/12

(54) **THERMOPLASTIC ELASTOMER COMPOSITION**

(30) Priority: 20.07.2020 JP 2020123908
(71) Applicant: ENEOS Corporation, Chiyoda-ku Tokyo 100-8162 (JP)
(72) Inventor: YAMAKI, Kousuke, Tokyo 100-8162 (JP); MATSUO, Akira, Tokyo 100-8162 (JP)
(74) Representative: Müller-Boré & Partner Patentanwälte PartG mbB
(86) International application number: PCT/JP2021/024193
(87) International publication number: WO 2022/019051

(57) **Abstract**

The present invention relates to a thermoplastic elastomer composition comprising:
an ionomer composed of a reaction product of an acid-modified polymer component with a fatty acid metal salt, wherein
the acid-modified polymer component is an acid-modified product of a non-crystalline polymer containing ethylene units, or a mixture of an acid-modified product of a non-crystalline polymer containing ethylene units and an acid-modified product of a crystalline polymer, and
the fatty acid metal salt is at least one selected from the group consisting of divalent and trivalent fatty acid metal salts.

## Description

### [Technical Field]

The present invention relates to a thermoplastic elastomer composition.

### [Background Art]

Thermoplastic elastomers are an extremely useful material in industry because they melt at the processing temperature during their molding process and can be molded by a well-known resin molding method. In the field of such thermoplastic elastomer compositions, various compositions have been studied in order to exhibit characteristics according to the intended use. For example, Japanese Unexamined Patent Application Publication No. 2017-206589 (PTL 1) discloses a thermoplastic elastomer composition comprising: at least one elastomer component selected from the group consisting of an elastomeric polymer (A) having a side chain containing a hydrogen-bond cross-linkable moiety having a carbonyl-containing group and/or a nitrogen-containing heterocycle and having a glass transition point of 25°C or lower and an elastomeric polymer (B) containing a hydrogen-bond cross-linkable moiety and a covalent-bond cross-linking moiety in a side chain and having a glass transition point of 25°C or lower; an organic clay having a content ratio of 20 parts by mass or less based on 100 parts by mass of the elastomer component; and a lubricant. However, the thermoplastic elastomer composition as described in PTL 1 is not always sufficient in terms of resistance to compression set at high temperatures.

### [Citation List]

### [Patent Literature]

[PTL 1] Japanese Unexamined Patent Application Publication No. 2017-206589

### [Summary of Invention]

### [Technical Problem]

The present invention has been made in view of the above-mentioned problems of the related art, and an object thereof is to provide a thermoplastic elastomer composition capable of having better resistance to compression set at high temperature.

### [Solution to Problem]

The present inventors have made earnest studies to achieve the above object, and have found as a result that when the thermoplastic elastomer composition contains an ionomer composed of a reaction product of an acid-modified polymer component with a fatty acid metal salt, when the acid-modified polymer component is an acid-modified product of a non-crystalline polymer containing ethylene units, or a mixture of an acid-modified product of a non-crystalline polymer containing ethylene units and an acid-modified product of a crystalline polymer, and further when the fatty acid metal salt is at least one selected from the group consisting of divalent and trivalent fatty acid metal salts, the resulting thermoplastic elastomer composition can be made superior in resistance to compression set at high temperature. Thus, the present invention has been completed.

Specifically, a thermoplastic elastomer composition of the present invention comprises:
an ionomer composed of a reaction product of an acid-modified polymer component with a fatty acid metal salt, wherein
the acid-modified polymer component is an acid-modified product of a non-crystalline polymer containing ethylene units, or a mixture of an acid-modified product of a non-crystalline polymer containing ethylene units and an acid-modified product of a crystalline polymer, and
the fatty acid metal salt is at least one selected from the group consisting of divalent and trivalent fatty acid metal salts.

In the above-described thermoplastic elastomer composition of the present invention, it is preferable that the fatty acid metal salt is the trivalent fatty acid metal salt.

Further, in the above-described thermoplastic elastomer composition of the present invention, it is preferable that the acid-modified product of a non-crystalline polymer containing ethylene units is an acid-modified product of an ethylene-butene copolymer.

Further, in the above-described thermoplastic elastomer composition of the present invention, it is preferable that a content of the acid-modified product of a crystalline polymer in the mixture of the acid-modified product of a non-crystalline polymer containing ethylene units and the acid-modified product of a crystalline polymer is 1 to 60% by mass (more preferably 5 to 35% by mass).

Further, in the above-described thermoplastic elastomer composition of the present invention, it is preferable that the acid-modified product of a crystalline polymer is at least one selected from the group consisting of polypropylene acid-modified products and polyethylene acid-modified products.

In the above-described thermoplastic elastomer composition of the present invention, it is more preferable to further comprise: an unmodified crystalline polymer, and it is more preferable that the unmodified crystalline polymer is at least one selected from the group consisting of polypropylene, polyethylene, and blends thereof.

Further, it is preferable that the thermoplastic elastomer composition of the present invention further comprises: a styrene-based block copolymer.

### [Advantageous Effects of Invention]

The present invention makes it possible to provide a thermoplastic elastomer composition capable of having better resistance to compression set at high temperature.

### [Description of Embodiments]

Hereinafter, the present invention is described in detail according to its preferable embodiments.

A thermoplastic elastomer composition of the present invention comprises: an ionomer composed of a reaction product of an acid-modified polymer component with a fatty acid metal salt, wherein the acid-modified polymer component is an acid-modified product of a non-crystalline polymer containing ethylene units, or a mixture of an acid-modified product of a non-crystalline polymer containing ethylene units and an acid-modified product of a crystalline polymer, and the fatty acid metal salt is at least one selected from the group consisting of divalent and trivalent fatty acid metal salts.

The acid-modified polymer component used as a material for the ionomers is an acid-modified product of a non-crystalline polymer containing ethylene units, or a mixture of an acid-modified product of a non-crystalline polymer containing ethylene units and an acid-modified product of a crystalline polymer.

The acid-modified product of a non-crystalline polymer containing ethylene units may be any acid-modified product of a non-crystalline polymer containing ethylene units in the main chain, and is not particularly limited, and known products can be appropriately used. Note that in the present specification, a "crystalline polymer" refers to a polymer having a crystalline portion with regularly arranged molecules (such as a polymer obtained by cooling and solidifying from a heated state or melted state, in which process the molecules are regularly arranged to form a crystal portion). Further, the "non-crystalline polymer" refers to a polymer with irregularly entangled molecules and thus having no crystalline portion of regularly arranged molecules (such as a polymer obtained by cooling and solidifying from a molten state, in which process the molecules are irregularly entangled and solidified, failing to form a so-called crystalline portion). These characteristics can be confirmed by an X-ray diffraction method or an analysis method for detecting the presence or absence of a crystallization heat generation phenomenon by differential scanning calorimetry. Further, the "non-crystalline polymer containing ethylene units" referred to here may be any non-crystalline polymer containing ethylene units in the main chain, and is not particularly limited, and a known non-crystalline polymer containing ethylene units can be appropriately used.

Further, the non-crystalline polymer containing ethylene units is not particularly limited, and for example, a copolymer of ethylene and α-olefin, a copolymer of ethylene, α-olefin, and non-conjugated diene, a copolymer of ethylene and vinyl monomer, a copolymer of ethylene and styrene, and the like can be preferably used. The α-olefin is not particularly limited, and examples thereof include propylene, 1-butene, 1-pentene, 2-methyl-1-butene, 3-methyl-1-butene, 1-hexene, 3-methyl-1-pentene, 4-methyl-1-pentene, 3,3-dimethyl-1-butene, 1-heptene, methyl-1-hexene, dimethyl-1-pentene, trimethyl-1-butene, ethyl-1-pentene, 1-octene, methyl-1-pentene, dimethyl-1-hexene, trimethyl-1-pentene, ethyl-1-hexene, methylethyl-1-pentene, diethyl-1-butene, propyl-1-pentene, 1-decene, methyl-1-nonene, dimethyl-1-octene, trimethyl-1-heptene, ethyl-1-octene, methylethyl-1-heptene, diethyl-1-hexene, 1-dodecene, 1-hexadodecene, and the like. These α-olefins may be used alone or in combination of two or more kinds.

Further, the non-conjugated diene is not particularly limited, and examples thereof include 5-ethylidene-2-norbornene (ENB), dicyclopentadiene (DCPD), 1,4-hexadiene (HD), 1,4-pentadiene, and the like. The non-conjugated diene may be used alone or in combination of two or more kinds.

Furthermore, the copolymer of ethylene and vinyl monomer, the copolymer of ethylene and styrene, and the like, which are suitable as the non-crystalline polymer containing ethylene units, are not particularly limited, and examples thereof include polyvinyl chloride (PVC), ethylene vinyl acetate copolymer resin (EVA resin), ethylene-vinyl alcohol copolymer (EVOH resin), styrene-ethylene block copolymer, and the like.

Examples of the non-crystalline polymer containing ethylene units include ethylene-propylene copolymer (EPM), ethylene-butene copolymer (EBM), ethylene-propylene-diene block copolymer (EPDM), styrene-ethylene/butylene-styrene block copolymer (SEBS), and styrene-ethylene/ethylene/propylene-styrene block copolymer (SEEPS), and among these, EBM, EPM, EPDM, and SEBS are preferable, EBM, EPM, and EPDM are more preferable, and EBM and EPM are further preferable, from the viewpoint of obtaining an elastomer having superior resistance to compression set. As described above, as the acid-modified product of a non-crystalline polymer containing ethylene units, an acid-modified product of ethylene-butene copolymer (EBM) and an acid-modified product of ethylene-propylene copolymer (EPM) are particularly preferable, and an acid-modified product of ethylene-butene copolymer (EBM) is most preferable.

Further, the acid-modified product of a non-crystalline polymer containing ethylene units is preferably obtained by acid-modifying the non-crystalline polymer by graft-polymerizing an acid component with the non-crystalline polymer containing ethylene units. Examples of the acid component include α,β-unsaturated monocarboxylic acid, α,β-unsaturated dicarboxylic acid, or an anhydride thereof. Examples of the α,β-unsaturated monocarboxylic acids include acrylic acid and methacrylic acid. Examples of the α,β-unsaturated dicarboxylic acid include maleic acid, fumaric acid, itaconic acid, citrus acid, tetrahydrophthalic acid, crotonic acid, isocrotonic acid, and the like. Further, as the acid component, α,β-unsaturated dicarboxylic acid and anhydrides thereof are more preferable, and among these, maleic acid or maleic anhydride is particularly preferable, and maleic anhydride is most preferable, from the viewpoint that inexpensive acid-modified polymers can be obtained. As described above, the acid-modified product of a non-crystalline polymer containing ethylene units is particularly preferably an acid-modified product modified with maleic anhydride (maleated product). Note that the method for graft-polymerizing an acid component with the non-crystalline polymer is not particularly limited, and a known method can be appropriately used, and for example, a method for graft-polymerizing an acid component (such as maleic acid or an anhydride thereof) in the presence of a known radical initiator can be appropriately used.

Further, in the acid-modified product of a non-crystalline polymer containing ethylene units, the amount of the acid component introduced (ratio of the amount of the acid component to the total amount of the acid-modified product) is preferably 0.1 to 10% by mass (more preferably 0.5 to 5% by mass). When the amount of the acid component introduced is the above lower limit or higher, an elastomer having higher resistance to compression set tends to be obtained. Meanwhile, in the case of the upper limit or lower, the fluidity at the time of melt processing is not impaired, so that the resulting elastomer tends to have higher moldability.

As the acid-modified product of a non-crystalline polymer containing ethylene units, a commercially available product can be used, and for example, TAFMER M manufactured by Mitsui Chemicals, Inc. (maleic anhydride-modified ethylene-propylene rubbers such as trade names: MP0610 and MP0620, and maleic anhydride-modified ethylene-butene rubbers such as trade names: MA8510, MH7010, MH7020, MH5010, MH5020, and MH5040) may be appropriately used.

Further, the acid-modified polymer component according to the present invention may be a mixture of an acid-modified product of a non-crystalline polymer containing ethylene units and an acid-modified product of a crystalline polymer, as described above. When such a mixture is used, it is possible to impart the composition with characteristics derived from a crystalline polymer, as well as characteristics derived from a non-crystalline polymer containing ethylene units. Note that the "acid-modified product of a non-crystalline polymer containing ethylene units" used in such a mixture is the same as that described above (the same applies to suitable ones).

Further, the acid-modified product of a crystalline polymer may be any acid-modified product of a crystalline polymer, and is not particularly limited, and known products can be appropriately used. Further, as the crystalline polymer, a known crystalline polymer can be appropriately used without any particular limitation, and suitable examples include olefin-based polymers, styrene-based polymers, polyamides, polyesters, polyacetals, polyvinyl chloride, and ethylene-vinyl acetate copolymer, and the like. Further, among those crystalline polymers, olefin-based polymers are more preferable from the viewpoint of obtaining an elastomer having better resistance to compression set.

As an olefin-based polymer suitable as the crystalline polymer, polyethylene (PE), polypropylene (PP), and polybutene (PB) can be appropriately used. Further, among those olefin-based polymers, at least one selected from the group consisting of polypropylene and polyethylene is particularly preferable from the viewpoint of low cost. As described above, the acid-modified product of a crystalline polymer is particularly preferably at least one selected from the group consisting of polypropylene acid-modified products and polyethylene acid-modified products.

Further, as the acid-modified product of a crystalline polymer, a product obtained by acid-modifying the crystalline polymer by graft-polymerizing an acid component with the crystalline polymer can be preferably used. Further, as the acid component, the same ones as those described above can be preferably used, and α,β-unsaturated dicarboxylic acid and anhydrides thereof are more preferable, and among these, maleic acid or maleic anhydride is particularly preferable, and maleic anhydride is most preferable, from the viewpoint that inexpensive acid-modified polymers can be obtained. As described above, the acid-modified product of a crystalline polymer is particularly preferably an acid-modified product modified with maleic anhydride (maleated product). Note that the method for graft-polymerizing an acid component with the crystalline polymer is not particularly limited, and a known method can be appropriately used, and for example, a method for graft-polymerizing an acid component (such as maleic acid or an anhydride thereof) in the presence of a known radical initiator can be appropriately used.

Further, examples of the acid-modified product of a crystalline polymer include maleic anhydride-modified polypropylene, maleic anhydride-modified polyethylene, and maleic anhydride-modified polybutene, and among these, maleic anhydride-modified polypropylene and maleic anhydride-modified polyethylene are more preferable from the viewpoint that they can be used at lower costs when used for sealing material applications such as daily necessities, automobile parts, electric appliances, and industrial parts, and they can be made to have a more appropriate hardness for those applications. As the acid-modified product of a crystalline polymer, a commercially available product (for example, trade name "Rikeaid MG670P" manufactured by RIKEN Vitamin Co., Ltd.) can be appropriately used.

Further, the content of the acid-modified product of a crystalline polymer in the mixture of the acid-modified product of a non-crystalline polymer containing ethylene units and the acid-modified product of a crystalline polymer is preferably 1 to 60% by mass (more preferably 2 to 50% by mass, further preferably 3 to 40% by mass, and particularly preferably 5 to 35% by mass). When the content of the acid-modified product of a crystalline polymer is the above lower limit value or higher, a higher effect tends to be obtained in terms of heat resistance. Meanwhile, in the case of the upper limit value or lower, a higher effect tends to be obtained in terms of flexibility.

Further, the fatty acid metal salt used in the ionomer according to the present invention is at least one selected from the group consisting of divalent fatty acid metal salts and trivalent fatty acid metal salts, that is, fatty acid metal salts each formed by one metal selected from divalent metals and trivalent metals and at least one fatty acid. As described above, the fatty acid metal salt may be at least one selected from the group consisting of divalent fatty acid metal salts and trivalent fatty acid metal salts, and is not particularly limited, and is preferably a salt (fatty acid metal salt) of at least one metal (divalent metal and/or trivalent metal) selected from aluminum, chromium, iron, gallium, indium, calcium, zinc, magnesium, beryllium, barium, and strontium.

As the metal (divalent metal or trivalent metal) that can be contained in the fatty acid metal salt, among the above, aluminum, iron, calcium, zinc and magnesium are more preferable from the viewpoint of obtaining more inexpensive fatty acid metal salts. Further, among the metals that can be contained in the fatty acid metal salt, a trivalent metal is more preferable, trivalent aluminum and trivalent iron are further preferable, and trivalent aluminum is particularly preferable, from the viewpoint that the cross-link density can be further increased and an elastomer having higher resistance to compression set can be obtained.

As described above, the fatty acid metal salt is preferably a trivalent fatty acid metal salt, and particularly preferably a fatty acid metal salt containing trivalent aluminum as a metal, from the viewpoint that the cross-link density can be further increased and an elastomer having better resistance to compression set can be obtained.

Further, in the fatty acid metal salt, the fatty acid is preferably a fatty acid having 5 to 80 carbon atoms (more preferably 10 to 70, and further preferably 15 to 60). When the number of carbon atoms of the fatty acid is the lower limit value or higher, the formation of ionomers tends to be easier. Meanwhile, when the number of carbon atoms of the fatty acid is the upper limit value or lower, it is possible to reduce the amount of free fatty acid, so that a higher effect tends to be obtained in terms of obtaining an elastomer having less stickiness and stain on the surface of the molded product. Further, among these, the fatty acid is more preferably stearic acid, oleic acid, palmitic acid, linoleic acid, linolenic acid, arachidonic acid, icosapentaenoic acid, docosahexaenoic acid, montanic acid, and lauric acid, further preferably stearic acid and oleic acid, and particularly preferably stearic acid.

The fatty acid metal salt may be a fatty acid metal salt formed by one metal selected from the above divalent metals and the above trivalent metals and at least one of the above fatty acids, and may be used alone or in combination of two or more kinds. Note that in the fatty acid metal salt, a substituent other than a fatty acid may be bonded to the metal in the fatty acid metal salt. Examples of the substituent include hydroxyl groups, methyl groups, ethyl groups, and the like.

Examples of divalent metal fatty acid salts that can be used as the metal fatty acid salt include zinc distearate, calcium distearate, magnesium distearate, barium distearate, and the like.

Further, examples of the trivalent fatty acid metal salts more suitable as the fatty acid metal salt include aluminum tristearate, (hydroxy)aluminum distearate, (dihydroxy)aluminum monostearate, methylaluminum stearate, and ethylaluminum stearate, and among these, aluminum tristearate, (hydroxy)aluminum distearate, and (dihydroxy)aluminum monostearate are preferable, and aluminum tristearate and (hydroxy)aluminum distearate are more preferable.

Further, the ionomer according to the present invention is a reaction product of the acid-modified polymer component with the fatty acid metal salt (the divalent fatty acid metal salt and/or the trivalent fatty acid metal salt). In the ionomer, the content of the fatty acid metal salt (total amount of the divalent fatty acid metal salt and the trivalent fatty acid metal salt) is preferably 2 to 20 parts by mass (more preferably 4 to 15 parts by mass, and further preferably 5 to 13 parts by mass) based on 100 parts by mass of the total amount of the acid-modified polymer component. When the content of the fatty acid metal salt is the lower limit value or higher, ionic bonding cross-links are sufficiently formed, so that the resistance to compression set at high temperature tends to be further improved. Meanwhile, in the case of the upper limit or lower, the abundance ratio of ionic bonding cross-links does not increase too much, so that the fluidity of the composition during processing tends to be higher.

Further, the method for preparing the ionomer is not particularly limited, and may be any method as long as it can react the acid groups (carboxylate groups) in the acid-modified polymer component (the acid-modified product of a non-crystalline polymer containing ethylene units or the mixture) with the fatty acid metal salt (the divalent fatty acid metal salt and/or the trivalent fatty acid metal salt). For example, a method may be employed in which the acid-modified product of a non-crystalline polymer containing ethylene units and the fatty acid metal salt are kneaded at a reaction temperature (which varies depending on the type of the acid-modified product and the like, but is , for example, 120 to 250°C) to react them to obtain an ionomer. By reacting in this manner, it is possible to obtain a reaction product in which an ionic bond cross-link is formed at least by acid groups (carboxylate groups) in the acid-modified product of a non-crystalline polymer containing ethylene units and metal ions derived from the metal in the fatty acid metal salt.

Note that the ionomer is composed of a reaction product obtained by using the acid-modified polymer component and a divalent fatty acid metal salt and/or a trivalent fatty acid metal salt (a fatty acid metal salt of a metal with a valance of 2 and/or a fatty acid metal salt of a metal with a valance of 3), so that its structure contains ionic bond cross-link formed by acid groups (carboxylate groups) in the acid-modified product and divalent metal ions and/or trivalent metal ions (more preferably, trivalent metal ions). Note that by utilizing an ionomer having an ionic bond cross-link formed by such metal ions, the resistance of the composition to compression set at high temperature can be further improved. Further, the present inventors infer that among such ionomers, ionomers having ionic bond cross-links formed by trivalent metal ions particularly have more binding sites and can have a further improved cross-link density compared to those having ionic bond cross-links formed by divalent metal ions, so that the resistance to compression set at high temperature can be further improved. Further, the ionomer having ionic bond cross-links formed by divalent metal ions and the ionomer having ionic bond cross-links formed by trivalent metal ions can more efficiently loosen the cross-links during melt processing and make them more fluid, compared to ionomers having ionic bond cross-links formed by tetravalent or higher metal ions. Therefore, the present inventors infer that compositions that contain the ionomer having ionic bond cross-links formed by divalent metal ions and the ionomer having ionic bond cross-links formed by trivalent metal ions may have higher moldability without impairing the fluidity during melt processing due to the type of the ionomers.

Further, the present inventors infer that in the present invention, when the acid-modified polymer component is the acid-modified product of a non-crystalline polymer containing ethylene units, the structure of the non-crystalline polymer containing ethylene units in the acid-modified product makes it possible to increase the cross-link density due to ionic bonds between molecules, which makes it possible to improve the resistance to compression set at high temperature. Further, the present inventors infer that when the acid-modified polymer component is the mixture, it is possible to increase the cross-link density by ionic bonds between molecules derived from the acid-modified product of a non-crystalline polymer containing ethylene units contained in the mixture, and it is possible to further increase the heat resistance based on the melting point, deflection temperature under load, and the like derived from the structure of the crystalline polymer in the acid-modified product of a crystalline polymer, so that it is possible to increase the resistance to compression set in a high temperature environment of 125°C or higher.

Further, the thermoplastic elastomer composition of the present invention preferably further comprises: an unmodified crystalline polymer from the viewpoint of obtaining higher moldability. Here, "unmodified" means that it is not acid-modified (for example, it is not modified by the acid component).

As the unmodified crystalline polymer, a known unmodified crystalline polymer can be appropriately used without any particular limitation, examples thereof include olefin-based polymers, polyamide-based polymers, polyester-based polymers, vinyl-based polymers, liquid crystal polymers, polyacetals, and polyphenylene sulfide. Among such unmodified crystalline polymers, from the viewpoint that the compatibility and kneadability with the acid-modified product of a non-crystalline polymer containing ethylene units can be further improved, olefin-based polymers are more preferable, and α-olefin-based polymers are particularly preferable. As the α-olefin-based polymer, for example, an α-olefin-based resin having no chemical-bond cross-linking moiety described in paragraphs [0204] to [0214] of Japanese Unexamined Patent Application Publication No. 2017-57322 can be preferably used. Note that the term "α-olefin-based polymer" as used herein refers to a homopolymer of α-olefin and a copolymer of α-olefin. Further, the "α-olefin" referred to here may be an alkene having a carbon-carbon double bond at the α-position, and examples thereof include ethylene, propylene, 1-butene, 1-pentene, 1-hexene, 1-heptene, 1-octene, 1-nonene, 1-decene, and the like.

Further, as the unmodified crystalline polymer, polyethylene (PE), polypropylene (PP), polybutene (PB), polymethylpentene, and blends thereof (such as so-called block PP, ethylene-propylene copolymer, and ethylene-butene copolymer) can be preferably used. Further, among such olefin-based polymers, at least one selected from the group consisting of polypropylene, polyethylene, and blends thereof is preferable from the viewpoint of low cost. Note that such unmodified crystalline polymers may be used alone or in combination of two or more kinds.

Note that the unmodified crystalline polymer is particularly preferable used when the acid-modified polymer component is an acid-modified product of a non-crystalline polymer containing ethylene units. As described above, if the unmodified crystalline polymer is contained when the acid-modified polymer component is an acid-modified product of a non-crystalline polymer containing ethylene units, it becomes possible to impart the composition with the characteristics of a crystalline polymer, whereby it is possible to obtain effects such as higher heat resistance, higher suppression of shrinkage during molding, and the like.

Further, the thermoplastic elastomer composition of the present invention preferably further comprises: a styrene-based block copolymer from the viewpoint of imparting flexibility. The styrene-based block copolymer is not particularly limited, and known ones can be appropriately used. For example, those described in paragraphs [0156] to [0163] of Japanese Unexamined Patent Application Publication No. 2017-57393 (styrene block copolymers having no chemical-bond cross-linking moiety) can be preferably used. Note that the "styrene-based block copolymer" may be any polymer having a styrene block structure at any site.

As the styrene-based block copolymer, from the viewpoint of achieving both rubber elasticity and thermoplasticity, styrene-isoprene-styrene block copolymer (SIS), styrene-ethylene-propylene-styrene block copolymer (SEPS), styrene-ethylene-ethylene-propylene-styrene block copolymer (SEEPS), styrenebutadiene-styrene block copolymer (SBS), styrene-ethylene-butylene-styrene block copolymer (SEBS), styrene-isoprene-butadiene-styrene block copolymer (SIBS), and products obtained by hydrogenating these (so-called hydrogenated products) are preferable, and SEBS and SEEPS are more preferable. The styrene-based block copolymers may be used alone or in combination of two or more kinds. Further, as the styrene-based block copolymers, commercially available ones can be appropriately used.

Further, from the viewpoints of mechanical strength and oil absorbency, the styrene-based block copolymer is preferably a styrene-based block copolymer having a styrene content of 10 to 50% by mass (more preferably 20 to 40% by mass). Further, from the viewpoints of mechanical strength and oil absorbency, as for the weight average molecular weight (Mw), number average molecular weight (Mn), and dispersion (Mw/Mn) of the molecular weight distribution of the styrene-based block copolymer, Mw is preferably 200,000 or more and 700,000 or less, more preferably 300,000 or more and 600,000 or less, and further preferably 350,000 or more and 550,000 or less, Mn is preferably 100,000 or more and 600,000 or less, more preferably 150,000 or more and 550,000 or less, and further preferably 200,000 or more and 500,000 or less, and Mw/Mn is preferably 5 or less, and more preferably 1 to 3. From the viewpoint of elastomeric properties, the glass transition point of the styrene-based block copolymer is preferably -80 to -30°C, and more preferably -70 to -40°C. As a method for measuring various characteristics (such as Mw and Mn), the methods described in paragraphs [0156] to [0163] of JP 2017-57393 A are employed.

Further, the thermoplastic elastomer composition of the present invention preferably further contains a process oil from the viewpoint that higher fluidity can be imparted during molding. The "process oil" is not particularly limited, and known process oils can be appropriately used, and examples thereof include paraffin oil (paraffinic oil), naphthene oil (naphthenic oil), aroma oil (aromatic oil), and the like. As the process oil, a commercially available one may be appropriately used.

Further, among such process oils, paraffin oil is particularly preferable from the viewpoint that it can suppress yellowing due to thermal deterioration at a higher level. Further, the paraffin oil suitable as the process oil is not particularly limited, and known paraffin oil can be appropriately used (such as those described in paragraphs [0153] to [0157] of Japanese Unexamined Patent Application Publication No. 2017-57323). Note that as for the paraffin oil, when a correlation ring analysis (n-d-M ring analysis) in accordance with ASTM D3238-85 on the oil to determine the percentage of the paraffin carbon number to the total carbon number (paraffin part: CP), the percentage of the naphthene carbon number to the total carbon number (naphthene part: CN), and the percentage of the aromatic carbon number to the total carbon number (aromatic part: CA), the percentage (CP) of the paraffin carbon number to the total carbon number is preferably 60% or more. Further, from the viewpoints of fluidity and safety, the paraffin oil has a kinematic viscosity at 40°C, measured in accordance with JIS K 2283 (issued in 2000), of preferably 10 mm²/s to 700 mm²/s, more preferably 20 to 600 mm²/s, and further preferably 30 to 500 mm²/s. Further, from the viewpoints of fluidity and safety, the paraffin oil has an aniline point, measured by the U-shaped tube method in accordance with JIS K2256 (issued in 2013), of preferably 80°C to 145°C, more preferably 100 to 145°C, and further preferably 105 to 145°C. Note that as the method for measuring the kinematic viscosity and the aniline point, the methods described in paragraphs [0153] to [0157] of JP 2017-57323 A can be employed. Further, the method for preparing a process oil is not particularly limited, and a known method can be appropriately employed. Further, as the process oil, a commercially available product may be used.

Further, in the thermoplastic elastomer composition of the present invention, the content of the ionomer is preferably 2 to 60% by mass (more preferably 5 to 50% by mass, and further preferably 10 to 40% by mass) based on the total amount of the composition. When the content of the ionomer is the lower limit value or higher, higher resistance to compression set tends to be obtained. Meanwhile, in the case of the upper limit value or lower, higher fluidity tends to be obtained during molding.

Further, when the thermoplastic elastomer composition of the present invention contains the unmodified crystalline polymer, the content of the unmodified crystalline polymer is preferably 10 to 90 parts by mass (more preferably 20 to 80 parts by mass, and further preferably 30 to 75 parts by mass) based on 100 parts by mass of the ionomer. When the content of the unmodified crystalline polymer is the lower limit value or higher, a higher effect tends to be obtained in terms of suppressing shrinkage during molding. Meanwhile, in the case of the upper limit value or lower, higher resistance to compression set tends to be obtained.

Furthermore, when the thermoplastic elastomer composition of the present invention contains the styrene-based block copolymer, the content of the styrene-based block copolymer is preferably 10 to 150 parts by mass (more preferably 15 to 120 parts by mass, and further preferably 20 to 100 parts by mass) based on 100 parts by mass of the ionomer. When the content of the styrene-based block copolymer is the lower limit value or higher, a more flexible elastomer tends to be obtained. Meanwhile, in the case of the upper limit value or lower, a higher effect tends to be obtained in terms of suppressing shrinkage during molding.

Further, when the thermoplastic elastomer composition of the present invention contains at least one selected from the group consisting of the unmodified crystalline polymer and the styrene-based block copolymer, the content of the ionomer is preferably 10 to 80% by mass (more preferably 15 to 75% by mass, and further preferably 20 to 70% by mass) based on the total amount of the ionomer, the unmodified crystalline polymer, and the styrene-based block copolymer. When the content of the ionomer (ratio of the ionomer to the total amount of the resin components in the composition) is the lower limit value or higher, higher resistance to compression set tends to be obtained. Meanwhile, in the case of the upper limit value or lower, higher fluidity tends to be obtained during molding.

Further, when the thermoplastic elastomer composition of the present invention contains the unmodified crystalline polymer, the content of the unmodified crystalline polymer is preferably 2 to 50% by mass (more preferably 5 to 40% by mass, and further preferably 10 to 30% by mass) based on the total amount of the ionomer, the unmodified crystalline polymer, and the styrene-based block copolymer in the composition. When the content of the unmodified crystalline polymer (the ratio of the unmodified crystalline polymer to the total amount of the resin components in the composition) is the lower limit value or higher, a higher effect tends to be obtained in terms of suppressing shrinkage during molding. Meanwhile, in the case of the upper limit value or lower, higher resistance to compression set tends to be obtained.

Further, when the thermoplastic elastomer composition of the present invention contains a styrene-based block copolymer, the content of the styrene-based block copolymer is preferably 5 to 70% by mass (more preferably 10 to 60% by mass, and further preferably 15 to 50% by mass) based on the total amount of the ionomer, the unmodified crystalline polymer, and the styrene-based block copolymer. When the content of the styrene-based block copolymer (the ratio of the styrene-based block copolymer to the total amount of the resin components in the composition) is the lower limit value or higher, an elastomer having higher flexibility tends to be obtained. Meanwhile, in the case of the upper limit value or lower, higher resistance to compression set tends to be obtained.

Further, when the thermoplastic elastomer composition of the present invention contains process oil, the content of the process oil is preferably 5 to 60% by mass (more preferably 10 to 50% by mass, and further preferably 15 to 40% by mass) based on the total amount of the composition. When the content of the process oil based on the total amount of the composition is the lower limit value or higher, higher fluidity tends to be obtained during molding. Meanwhile, in the case of the upper limit value or lower, a higher effect tends to be obtained in terms of sufficiently suppressing oil bleed-out to the surface of the molded product, making it possible to suppress the stickiness caused by the bleed-out at a higher level.

Further, when the thermoplastic elastomer composition of the present invention contains the unmodified crystalline polymer and/or the styrene-based block copolymer and the process oil, the content of the process oil is preferably 10 to 100 parts by mass (more preferably 15 to 90 parts by mass, and further preferably 20 to 80 parts by mass) based on 100 parts by mass of the total amount of the ionomer, the unmodified crystalline polymer, and the styrene-based block copolymer. When the content of the process oil is the lower limit value or higher, higher fluidity tends to be obtained during molding. Meanwhile, in the case of the upper limit value or lower, a higher effect tends to be obtained in terms of sufficiently suppressing oil bleed-out to the surface of the molded product, making it possible to suppress the stickiness caused by the bleed-out at a higher level.

Further, when the thermoplastic elastomer composition of the present invention contains the styrene-based block copolymer and the process oil, the content of the process oil based on 100 parts by mass of the styrene-based block copolymer is preferably 10 to 300 parts by mass (more preferably 20 to 280 parts by mass, and further preferably 30 to 260 parts by mass). When the content of the process oil is the lower limit value or higher, higher fluidity tends to be obtained during molding. Meanwhile, in the case of the upper limit value or lower, a higher effect tends to be obtained in terms of sufficiently suppressing oil bleed-out to the surface of the molded product, making it possible to suppress the stickiness caused by the bleed-out at a higher level.

Note that as necessary, the thermoplastic elastomer composition of the present invention can contain various additives such as polymers other than the above-described polymers, reinforcing agents (types of fillers: such as silica and carbon black), fillers obtained by introducing amino groups, amino group-containing compounds other than the amino group-introduced fillers, anti-aging agents, antioxidants, pigments (dyes), plasticizers other than the above-described process oil, thixotropy-imparting agents, ultraviolet absorbers, flame retardants, solvents, surfactants (including leveling agents), deodorants (such as baking soda), dispersants, dehydrators, corrosion inhibitors, adhesives, antistatic agents, fillers (such as clay), lubricants, slip agents, light stabilizers, conductivity-imparting agents, antibacterial agents, neutralizers, softeners, fillers, colorants, and heat conductive fillers. These additives are not particularly limited, and known additives can be used as appropriate (such as those described in paragraphs [0169] to [0174] of Japanese Patent No. 5918878 and those exemplified in Japanese Unexamined Patent Application Publication No. 2006-131663). When the thermoplastic elastomer composition of the present invention further contains the additive, the content of the additive is preferably about 0.01 to 10% by mass based on the total amount of the composition.

In addition, the thermoplastic elastomer composition of the present invention has higher resistance to compression set at high temperature. As for the thermoplastic elastomer composition of the present invention, the value of the compression set, measured in accordance with JIS K6262 (issued in 2013) by employing the measurement condition of leaving at 125°C for 22 hours, is preferably 70% or less (more preferably 50% or less, and further preferably 40% or less). As a method for measuring the value of compression set, the measurement method described in the section of Examples can be employed.

Further, the method for preparing a thermoplastic elastomer composition of the present invention is not particularly limited, and for example, it is possible to employ a method in which a raw material mixture containing the acid-modified polymer component and the fatty acid metal salt (the divalent fatty acid metal salt and/or the trivalent fatty acid metal salt) is kneaded (mixed) to form ionomers, thereby obtaining a thermoplastic elastomer composition. In the kneading step (mixing step), the temperature condition is preferably 120 to 250°C, and more preferably 140 to 230°C, from the viewpoint of obtaining a kneaded product having more uniform physical properties while further suppressing thermal deterioration. Note that the method for kneading (mixing) the raw material mixture is not particularly limited, and for example, it is possible to employ a method for kneading using a roll, a kneader, an extruder, a universal stirrer, or the like. Note that when kneaded (mixed) under such temperature conditions, the acid-modified polymer component and the fatty acid metal salt can be reacted more efficiently, which also makes it possible to form ionomers while plasticizing the raw material mixture.

Further, when components such as the unmodified crystalline polymer, the styrene-based block copolymer, and the process oil are to be contained, these components may be appropriately added to the raw material mixture before the kneading step, followed by kneading (mixing) together to form a thermoplastic elastomer composition containing these components, or ionomers may be formed as described above, then these components may be added, and then further kneaded (mixed) to form a thermoplastic elastomer composition.

Further, as the method for producing a thermoplastic elastomer composition, it is preferable to employ a method in which a raw material mixture containing the acid-modified polymer component, the fatty acid metal salt, the styrene-based block copolymer, and the process oil is used and kneaded (mixed) under a temperature condition of 120 to 250°C (more preferably 140 to 230°C) to form ionomers in the raw material mixture, thereby obtaining a thermoplastic elastomer composition. Note that in such a method, the raw material mixture may further contain the unmodified crystalline polymer. Further, when producing a thermoplastic elastomer composition as described above, it is preferable to use the components (the acid-modified polymer component, the fatty acid metal salt, the styrene-based block copolymer, the process oil, and the unmodified crystalline polymer) so that the content thereof satisfies preferable conditions for the content in the above-mentioned composition. When a raw material mixture containing the acid-modified polymer component, the fatty acid metal salt, the styrene-based block copolymer, and the process oil is used as described above, the content of the acid-modified polymer component based on all the components (when the additives and the like are contained in addition to the above-mentioned components such as the styrene-based block copolymer and process oil, all the components including the additives and the like) is not particularly limited, but is preferably 5 to 60% by mass. Further, when a raw material mixture containing the acid-modified polymer component, the fatty acid metal salt, the styrene-based block copolymer, and the process oil is used, if the acid-modified polymer component is a mixture of the acid-modified product of a non-crystalline polymer containing ethylene units and the acid-modified product of a crystalline polymer, the content of the acid-modified product of a crystalline polymer based on all the components (when the additives and the like are contained in addition to the above-mentioned components such as the styrene-based block copolymer and process oil, all the components including the additives and the like) is not particularly limited, but is preferably 5 to 25% by mass.

The form of the thermoplastic elastomer composition thus obtained is not particularly limited, and it can be formed into various shapes such as pellets, veils, rods, ribbons, and sheets by appropriately molding using a known device such as a pelletizer. Further, such a thermoplastic elastomer composition of the present invention can be appropriately used for applications such as daily necessities, automobile parts, electric appliances, and industrial parts, and can be particularly suitably used for automobile parts (such as sealing materials for electrical parts) and the like used under high temperature conditions because it has higher resistance to compression set at high temperature (125°C) and can be used at high temperatures that would make difficult the use of conventional thermoplastic elastomer compositions.

### [Examples]

Hereinafter, the present invention is described in more detail based on Examples and Comparative Examples, but the present invention is not limited to the following Examples.

### [Materials Used in Each Example]

First, the trade names and the like of the materials (such as compounds) used for producing the compositions and the like will be described separately in Examples and the like described later. In the following Examples, each material is represented by an abbreviation or name described herein.
(1) Acid-Modified Polymer Components
   - Maleated EBM: Maleic anhydride-modified ethylene-butene copolymer (trade name "TAFMER MH5040" manufactured by Mitsui Chemicals, Inc., maleation rate: 2.5% by mass)
   - Maleated PP: Maleic anhydride-modified polypropylene (trade name "Rikeaid MG670P" manufactured by RIKEN Vitamin Co., Ltd., maleation rate: 1.834% by mass)
(2) Fatty Acid Metal Salts
   - Aluminum tristearate (trivalent fatty acid metal salt, trade name "AL Stearate 900" manufactured by NOF CORPORATION)
   - (Hydroxy)aluminum distearate (trivalent fatty acid metal salt, trade name "AL Stearate 600" manufactured by NOF CORPORATION)
   - Zinc distearate (divalent fatty acid metal salt, trade name "Zinc Stearate" manufactured by NOF CORPORATION)
   - Calcium distearate (divalent fatty acid metal salt, trade name "Calcium Stearate" manufactured by NOF CORPORATION)
   - Magnesium distearate (divalent fatty acid metal salt, trade name "Magnesium Stearate" manufactured by NOF CORPORATION)
(3) Unmodified Crystalline Polymer
   - Block PP (trade name "PM870A" manufactured by SunAllomer Ltd.) (4) Styrene-Based Block Copolymer
   - SEBS: Styrene-ethylene-butylene-styrene block copolymer (trade name "G1633EU" manufactured by Kraton Corporation, styrene content: 30% by mass) (5) Other Additive Components
   - Paraffin oil: trade name "HV300-S(J)" manufactured by JXTG Energy Corporation.

### [Method for Evaluating Characteristics of Thermoplastic Elastomer Composition]

Next, a method for evaluating the characteristics of the thermoplastic elastomer composition obtained in each Example and the like will be described. Note that Tables 1 to 3 show the results obtained for Examples and Comparative Examples.

### <Step of Preparing Measurement Sheet>

The thermoplastic elastomer compositions obtained in Examples and the like were respectively used. First, a pressure press machine with a water-cooling function was used to heat to 200°C. Then, 43 g of the thermoplastic elastomer composition was placed in a mold having a length of 15 cm, a width of 15 cm, and a thickness of 2 mm, and heated (preheated) at 200°C for 5 minutes before pressurization, then pressurized (heat pressed) under the conditions of temperature: 200°C, working pressure: 20 MPa, and pressurization time: 5 minutes, and further subjected to water-cooled pressing under the conditions of working pressure: 20 MPa and pressurization time: 2 minutes. The thermoplastic elastomer composition after pressing was taken out from the mold to obtain a sheet having a thickness of 2 mm. Note that for the measurement of JIS-A hardness, compression set (C-Set), and tensile characteristics, the measurement sheets were used.

### <Measurement of JIS-A Hardness>

The above measurement sheets were respectively used to measure the JIS-A hardness of each of the thermoplastic elastomer compositions obtained in Examples and the like in accordance with JIS K6253 (issued in 2012).

### <Measurement of Compression Set (C-Set)>

As for the thermoplastic elastomer composition obtained in each of Examples and the like, the above-mentioned measurement sheet was punched out into disks each having a diameter of 29 mm, and seven disks were stacked to prepare a sample so that the height (thickness) was 12.5 ± 0.5 mm. The sample thus obtained was compressed by 25% with a special jig and left at 125°C for 22 hours, and the subsequent compression set (unit: %) was measured in accordance with JIS K6262 (issued in 2013). Note that the compression device used was a trade name "Vulcanized Rubber Compression Set Tester SCM-1008L" manufactured by Dumbbell Co., Ltd.

### <Tensile Characteristics>

As for the thermoplastic elastomer composition obtained in each of Examples and the like, the above measuring sheets were used, and No. 3 dumbbell-shaped test pieces were punched out from the measuring sheets (thickness 2 mm), and a tensile test at a tensile speed of 500 mm/min was performed in accordance with JIS K6251 (issued in 2010) to measure the 100% modulus (100% Mod) [MPa], breaking strength (T_{B}) [MPa], and elongation at break (E_{B}) [%] at room temperature (25°C).

### (Example 1)

Maleated EBM (6.0 kg), SEBS (4.0 kg), paraffin oil (8.0 kg), and aluminum tristearate (trivalent fatty acid metal salt: 0.54 kg) were added into a stirring blade mixer, and stirred until uniform while controlling the temperature at 50°C or lower to obtain a raw material mixture. Next, the resulting raw material mixture was put into a twin-screw extruder, kneaded at 200°C for 5 minutes, discharged into a strand shape, sufficiently cooled with water at a temperature of 20°C for solidification, and then cut to obtain a pellet-shaped thermoplastic elastomer composition having a thickness of 3 to 5 mm and a length of 4 to 6 mm.

### (Example 2)

A pellet-shaped thermoplastic elastomer composition was obtained in the same manner as in Example 1 except that the amount of aluminum tristearate used was changed to 0.72 kg.

### (Example 3)

A pellet-shaped thermoplastic elastomer composition was obtained in the same manner as in Example 2 except that 0.72 kg of zinc distearate (divalent fatty acid metal salt) was used instead of aluminum tristearate (0.72 kg).

### (Comparative Example 1)

A pellet-shaped thermoplastic elastomer composition was obtained in the same manner as in Example 1 except that aluminum tristearate was not used.

Table 1 shows the composition ratios of the materials for the thermoplastic elastomer compositions obtained in Examples 1 to 3 and Comparative Example 1, and the evaluation results for the characteristics of each composition. Note that the symbol "-" in Table 1 indicates that the component is not used (the content is 0 parts by mass).

**[Table 1]**

| | | Example 1 | Example 2 | Example 3 | Comparative Example 1 |
|---|---|---|---|---|---|
| Ratio of Polymers in Resin Component^{∗1} [Mass%] | Maleated EBM | 60 | 60 | 60 | 60 |
| | SEBS | 40 | 40 | 40 | 40 |
| Content of Additives Based on 100 Parts by Mass of Total Amount of Resin Component^{∗1} [Parts by Mass] | Paraffin Oil | 80 | 80 | 80 | 80 |
| | Aluminum Tristearate | 5.4 | 7.2 | - | - |
| | Zinc Distearate | - | - | 7.2 | - |
| C-Set(125°C) [%] | | 66 | 59 | 72 | 100 |
| A Hardness [-] | | 30 | 32 | 30 | 26 |
| 100% Mod [MPa] | | 0.7 | 0.7 | 0.7 | 0.4 |
| Breaking Strength [MPa] | | 2.1 | 1.9 | 2.3 | 2.7 |
| Elongation at Break [%] | | 380 | 300 | 400 | 800 |

| | | | | | |
|---|---|---|---|---|---|
| ^{∗}1: The resin component in the table indicates a mixture of polymers (mixture of maleated EBM and SEBS). | | | | | |

As is apparent from the results shown in Table 1, it was found that the thermoplastic elastomer compositions obtained in Examples 1 and 2 containing an ionomer formed by using a trivalent fatty acid metal salt; and the thermoplastic elastomer composition obtained in Example 3 containing an ionomer formed by using a divalent fatty acid metal salt; had a compression set value of 72% or less under the measurement conditions of 125°C and 22 hours, showing that the resistance to compression set at high temperature was sufficiently superior. In contrast, in the absence of a fatty acid metal salt (divalent or trivalent fatty acid metal salt) (Comparative Example 1), the compression set value was 100% under the measurement conditions of 125°C and 22 hours.

Note that comparing the thermoplastic elastomer compositions obtained in Examples 1 and 2 containing an ionomer formed by using a trivalent fatty acid metal salt with the thermoplastic elastomer composition obtained in Example 3 containing an ionomer formed by using a divalent fatty acid metal salt, it was found that when a trivalent fatty acid metal salt was used, the compression set value was lower under the measurement conditions of 125°C and 22 hours, and the resistance to compression set at high temperature was better.

The pellet-shaped thermoplastic elastomer compositions obtained in Examples 1 and 2 and Comparative Example 1 were each put into an injection molding machine (trade name "FANUK ROBOSHOT α-S100iA" manufactured by FANUC CORPORATION). When flat plates of 100 mm × 100 mm × 4 mm were formed to check the injection moldability at an injection temperature of 230°C and an injection rate of 10 mm/sec, it was confirmed that all of these had sufficient injection fluidity and could be sufficiently injection molded. In fact, in any of the cases where the thermoplastic elastomer compositions obtained in Examples 1 and 2 and Comparative Example 1 were used, flat plates of 100 mm × 100 mm × 4 mm could be efficiently molded by injection molding at an injection temperature of 230°C and an injection rate of 10 mm/sec. Here, the temperature of the mold for forming flat plates was 40°C, and the cooling time (time for solidification in the mold) was 20 seconds.

### (Example 4)

Maleated EBM (3.5 kg), block PP (2.5 kg), SEBS (4.0 kg), paraffin oil (9.0 kg), and aluminum tristearate (trivalent fatty acid metal salt: 0.54 kg) were added into a stirring blade mixer, and stirred until uniform while controlling the temperature at 50°C or lower to obtain a raw material mixture. Next, the resulting raw material mixture was put into a twin-screw extruder, kneaded at 200°C for 5 minutes, discharged into a strand shape, sufficiently cooled with water at a temperature of 20°C for solidification, and then cut to obtain a pellet-shaped thermoplastic elastomer composition having a thickness of 3 to 5 mm and a length of 4 to 6 mm.

### (Examples 5 to 7)

Pellet-shaped thermoplastic elastomer compositions were obtained in the same manner as in Example 4 except that (hydroxy)aluminum distearate (trivalent fatty acid metal salt) was used in an amount of 0.54 kg (Example 5), 1.0 kg (Example 6), and 1.1 kg (Example 7) instead of aluminum tristearate.

### (Comparative Example 2)

A pellet-shaped thermoplastic elastomer composition was obtained in the same manner as in Example 4 except that aluminum tristearate was not used.

Table 2 shows the composition ratios of the materials for the thermoplastic elastomer compositions obtained in Examples 3 to 6 and Comparative Example 3, and the evaluation results for the characteristics of each composition. Note that the symbol "-" in Table 2 indicates that the component is not used (the content is 0 parts by mass).

**[Table 2]**

| | | Example 4 | Example 5 | Example 6 | Example 7 | Comparative Example 2 |
|---|---|---|---|---|---|---|
| Ratio of Polymers in Resin Component^{∗1} [Mass%] | Maleated EBM | 35 | 35 | 35 | 35 | 35 |
| | Block PP | 25 | 25 | 25 | 25 | 25 |
| | SEBS | 40 | 40 | 40 | 40 | 40 |
| Content of Additives Based on 100 Parts by Mass of Total Amount of Resin Component^{∗1} [Parts by Mass] | Paraffin Oil | 90 | 90 | 90 | 90 | 90 |
| | Aluminum Tristearate | 5.4 | - | - | - | - |
| | (Hydroxy)Aluminum Distearate | - | 5.4 | 10 | 11 | - |
| C-Set(125°C) [%] | | 49 | 49 | 35 | 33 | 100 |
| A Hardness [-] | | 46 | 44 | 48 | 49 | 30 |
| 100% Mod [MPa] | | 1.2 | 1.2 | 1.3 | 1.5 | 0.7 |
| Breaking Strength [MPa] | | 3.8 | 3.4 | 3.9 | 4.1 | 2.3 |
| Elongation at Break [%] | | 580 | 510 | 440 | 440 | 770 |

| | | | | | | |
|---|---|---|---|---|---|---|
| ^{∗}1: The resin component in the table indicates a mixture of polymers (mixture of maleated EBM, Block PP, and SEBS). | | | | | | |

As is apparent from the results shown in Table 2, it was found that the thermoplastic elastomer compositions obtained in Examples 4 to 7 containing an ionomer formed by using a trivalent fatty acid metal salt had a compression set value of 49% or less under the measurement conditions of 125°C and 22 hours, showing that the resistance to compression set at high temperature was sufficiently superior. In contrast, in the absence of a fatty acid metal salt (Comparative Example 2), the compression set value was 100% under the measurement conditions of 125°C and 22 hours.

The pellet-shaped thermoplastic elastomer compositions obtained in Examples 4 to 7 were each put into an injection molding machine (trade name "FANUK ROBOSHOT α-S100iA" manufactured by FANUC CORPORATION). When flat plates of 100 mm × 100 mm × 4 mm were formed to check the injection moldability at an injection temperature of 230°C and an injection rate of 10 mm/sec, it was found that the pellet-shaped thermoplastic elastomer compositions obtained in Examples 4 to 6 had higher injection fluidity than the pellet-shaped thermoplastic elastomer composition obtained in Example 7. In fact, in the cases where the thermoplastic elastomer compositions obtained in Examples 4 to 6 were used, flat plates of 100 mm × 100 mm × 4 mm could be efficiently molded by injection molding at an injection temperature of 230°C and an injection rate of 10 mm/sec. Here, the temperature of the mold for forming flat plates was 40°C, and the cooling time (time for solidification in the mold) was 20 seconds. Meanwhile, among the pellet-shaped thermoplastic elastomer compositions obtained in Examples 4 to 7, it is apparent from the data in Table 2 that the pellet-shaped thermoplastic elastomer composition obtained in Example 7 has a lower compression set value. It has been found from these results that when the content ratio of the trivalent fatty acid metal salt is in an appropriate range, it is possible to improve the balance between injection moldability and resistance to compression set.

### (Example 8)

Maleated EBM (3.5 kg), maleated PP (2.5 kg), SEBS (4.0 kg), paraffin oil (8.0 kg), and (hydroxy)aluminum distearate (trivalent fatty acid metal salt: 0.24 kg) were added into a stirring blade mixer, and stirred until uniform while controlling the temperature at 50°C or lower to obtain a raw material mixture. Next, the resulting raw material mixture was put into a twin-screw extruder, kneaded at 200°C for 5 minutes, discharged into a strand shape, sufficiently cooled with water at a temperature of 20°C for solidification, and then cut to obtain a pellet-shaped thermoplastic elastomer composition having a thickness of 3 to 5 mm and a length of 4 to 6 mm.

### (Example 9)

A pellet-shaped thermoplastic elastomer composition was obtained in the same manner as in Example 8 except that the amount of (hydroxy)aluminum distearate used was changed to 0.72 kg.

### (Examples 10 and 11)

Pellet-shaped thermoplastic elastomer compositions were obtained in the same manner as in Example 8 except that aluminum tristearate (trivalent fatty acid metal salt) was used in an amount of 0.24 kg (Example 10) and 0.72 kg (Example 11) instead of (hydroxy)aluminum distearate.

### (Examples 12 to 14)

Pellet-shaped thermoplastic elastomer compositions were obtained in the same manner as in Example 8 except that calcium distearate (divalent fatty acid metal salt) of 0.72 kg (Example 12), zinc distearate (divalent fatty acid metal salt) of 0.72 kg (Example 13), and magnesium distearate (divalent fatty acid metal salt) of 0.72 kg (Example 14) were respectively used instead of (hydroxy)aluminum distearate.

### (Comparative Example 3)

A pellet-shaped thermoplastic elastomer composition was obtained in the same manner as in Example 8 except that (hydroxy)aluminum distearate was not used.

Table 3 shows the composition ratios of the materials for the thermoplastic elastomer compositions obtained in Examples 8 to 14 and Comparative Example 3, and the evaluation results for the characteristics of each composition. Note that the symbol "-" in Table 3 indicates that the component is not used (the content is 0 parts by mass).

**[Table 3]**

| | | Example 8 | Example 9 | Example 10 | Example 11 | Example 12 | Example 13 | Example 14 | Comparative Example 3 |
|---|---|---|---|---|---|---|---|---|---|
| Ratio of Polymers in Resin Component^{∗1} [Mass%] | Maleated EBM | 35 | 35 | 35 | 35 | 35 | 35 | 35 | 35 |
| | Maleated PP | 25 | 25 | 25 | 25 | 25 | 25 | 25 | 25 |
| | SEBS | 40 | 40 | 40 | 40 | 40 | 40 | 40 | 40 |
| Content of Additives Based on 100 Parts by Mass of Total Amount of Resin Component^{∗1} [Parts by Mass] | Paraffin Oil | 80 | 80 | 80 | 80 | 80 | 80 | 80 | 80 |
| | Aluminum Tristearate | - | - | 2.4 | 7.2 | - | - | - | - |
| | (Hydroxy)Aluminum Distearate | 2.4 | 7.2 | - | - | - | - | - | - |
| | Calcium Distearate | - | - | - | - | 7.2 | - | - | - |
| | Zinc Distearate | - | - | - | - | - | 7.2 | - | - |
| | Magnesium Distearate | - | - | - | - | - | - | 7.2 | - |
| C-Set(125°C) [%] | | 55 | 39 | 54 | 39 | 58 | 79 | 65 | 100 |
| A Hardness [-] | | 50 | 54 | 48 | 54 | 48 | 46 | 50 | 30 |
| 100% Mod [MPa] | | 1.4 | 1.8 | 1.4 | 1.8 | 1.2 | 1.1 | 1.3 | 0.7 |
| Breaking Strength [MPa] | | 4.5 | 5 | 4.5 | 5.7 | 4.1 | 4.4 | 5 | 2.1 |
| Elongation at Break [%] | | 420 | 380 | 420 | 450 | 500 | 590 | 520 | 670 |

| | | | | | | | | | |
|---|---|---|---|---|---|---|---|---|---|
| ^{∗}1: The resin component in the table indicates a mixture of polymers (mixture of maleated EBM, maleated PP, and SEBS). | | | | | | | | | |

As is apparent from the results shown in Table 3, it was found that the thermoplastic elastomer compositions obtained in Examples 8 to 11 containing an ionomer formed by using a trivalent fatty acid metal salt; and the thermoplastic elastomer compositions obtained in Examples 12 to 14 containing an ionomer formed by using a divalent fatty acid metal salt; had a compression set value of 79% or less under the measurement conditions of 125°C and 22 hours, showing that the resistance to compression set at high temperature was sufficiently superior. In contrast, in the absence of a fatty acid metal salt (Comparative Example 3), the compression set value was 100% under the measurement conditions of 125°C and 22 hours.

Further, comparing the thermoplastic elastomer compositions obtained in Examples 8 to 11 containing an ionomer formed by using a trivalent fatty acid metal salt with the thermoplastic elastomer compositions obtained in Examples 12 to 14 containing an ionomer formed by using a divalent fatty acid metal salt, it was found that when a trivalent fatty acid metal salt was used, the compression set value was lower under the measurement conditions of 125°C and 22 hours, and the resistance to compression set at high temperature was better.

The pellet-shaped thermoplastic elastomer compositions obtained in Examples 8 to 11 and Comparative Example 3 were each put into an injection molding machine (trade name "FANUK ROBOSHOT α-S100iA" manufactured by FANUC CORPORATION). When flat plates of 100 mm × 100 mm × 4 mm were formed to check the injection moldability at an injection temperature of 230°C and an injection rate of 10 mm/sec, it was confirmed that all of them had sufficient injection fluidity and could be sufficiently injection molded. In fact, in any of the cases where the thermoplastic elastomer compositions obtained in Examples 8 to 11 and Comparative Example 3 were used, flat plates of 100 mm × 100 mm × 4 mm could be efficiently molded by injection molding at an injection temperature of 230°C and an injection rate of 10 mm/sec. Here, the temperature of the mold for forming flat plates was 40°C, and the cooling time (time for solidification in the mold) was 20 seconds.

Further, in general, in order for an elastomer composition to have higher resistance to compression set at high temperature (heat resistance), a method is examined that includes using a resin having a high melting point and a hardness and increasing the amount of that resin added. However, as is apparent from the results shown in Tables 1 to 3, it can be seen that as for the thermoplastic elastomer compositions obtained in Examples 1 to 14 containing ionomers formed by using fatty acid metal salts, it is unnecessary to use such a large amount of resin (resin having a high melting point and being hard), so that the A hardness can be set to 30 to 70, which is sufficiently soft. Furthermore, it can be seen that as for the thermoplastic elastomer compositions obtained in Examples 1 to 14, the elongation at break (tensile elongation) is 300% or more, which is also sufficiently soft in view of the value of A hardness above. As described above, the present invention also makes it possible to provide a thermoplastic elastomer composition having high resistance to compression set at high temperature (heat resistance) and further having a sufficient softness such that an A hardness becomes 30 to 70 depending on the composition.

### [Industrial Applicability]

As described above, the present invention makes it possible to provide a thermoplastic elastomer composition capable of having better resistance to compression set at high temperature. As described above, the thermoplastic elastomer composition of the present invention is particularly excellent in resistance to compression set at high temperature, and is therefore particularly useful as a material for manufacturing automobile parts and the like used under high temperature conditions.

## Claims

1. A thermoplastic elastomer composition comprising:
an ionomer composed of a reaction product of an acid-modified polymer component with a fatty acid metal salt, wherein
the acid-modified polymer component is an acid-modified product of a non-crystalline polymer containing ethylene units, or a mixture of an acid-modified product of a non-crystalline polymer containing ethylene units and an acid-modified product of a crystalline polymer, and
the fatty acid metal salt is at least one selected from the group consisting of divalent and trivalent fatty acid metal salts.

2. The thermoplastic elastomer composition according to claim 1, wherein the fatty acid metal salt is the trivalent fatty acid metal salt.

3. The thermoplastic elastomer composition according to claim 1 or 2, wherein the acid-modified product of a non-crystalline polymer containing ethylene units is an acid-modified product of an ethylene-butene copolymer.

4. The thermoplastic elastomer composition according to any one of claims 1 to 3, wherein a content of the acid-modified product of a crystalline polymer in the mixture of the acid-modified product of a non-crystalline polymer containing ethylene units and the acid-modified product of a crystalline polymer is 1 to 60% by mass.

5. The thermoplastic elastomer composition according to any one of claims 1 to 4, wherein the acid-modified product of a crystalline polymer is at least one selected from the group consisting of polypropylene acid-modified products and polyethylene acid-modified products.

6. The thermoplastic elastomer composition according to any one of claims 1 to 5, further comprising: an unmodified crystalline polymer.

7. The thermoplastic elastomer composition according to claim 6, wherein the unmodified crystalline polymer is at least one selected from the group consisting of polypropylene, polyethylene, and blends thereof.

8. The thermoplastic elastomer composition according to any one of claims 1 to 7, further comprising: a styrene-based block copolymer.
